# EUROPEAN PATENT SPECIFICATION

(11) **EP 2 151 636 B1**
(45) Date of publication and mention of the grant of the patent: **02.01.2013**
(21) Application number: 08380246.2
(22) Date of filing: 05.08.2008
(51) Int. Cl.: F24D 13/02, F24H 7/06

(54) **Thermal accumulation-transmission panel and the process for obtaining it**
Wärmeansammlungs- bzw. übertragungstafel und Verfahren zum Erhalt derselben
Panneau à accumulation-transmission thermique et son procédé de fabrication

(43) Date of publication of application: 10.02.2010
(73) Proprietor: Climastar Global Company, S.L., 33201 Gijón (Asturias) (ES)
(72) Inventor: Llana Garcia, Pedro Luis, 33697 Serin (ES)
(74) Representative: ABG Patentes, S.L.

(56) References cited:
- EP-A- 1 031 796
- EP-A- 1 455 146
- GB-A- 779 242
- JP-A- 2003 302 068
- US-A- 1 706 016
- US-A- 5 461 015

## Description

This invention is related to a thermal accumulator and transmission panel.

### Background and State of the Art

Within the huge variety of products of the ceramics industry, porcelain stoneware is one of the most important. This material originated in the 1980s as a product with high technical performance, characterised by its ability to reproduce nature and come closer, more than any other ceramic product, to the concept of natural rock or stone. It gave rise to proposals for original and at that time unknown combinations. Porcelain stoneware is included in the BIa group (dry-pressed flagstone with water absorption E<0.5%) of regulations ISO13006 and UNE 67-087. It is a vitrified product in its entire mass and very compact, having a very low porosity as an essential characteristic, which confers excellent mechanical and chemical properties and resistance to freezing, making it useful for surfacing or exterior covering in cold areas. It also has a high resistance to chemical agents and cleaning products and also maintains a very good resistance to abrasion and has a high breakage point. To this should be added its ease of cleaning, which makes this an ideal material for surfacing in spaces where hygiene is of utmost importance.

The manufacturing process for traditional porcelain stoneware for surfacing comprises the following stages:
a) Homogenisation: process of mixing clays, feldspars and quartz to homogeneity;
b) Micronization: refinement phase consisting of putting the base material into huge mills with alumina balls which produce the milling in damp conditions giving a very fine particle size;
c) Atomisation: process of inclusion into an atomiser for the separation of particles in suspension and subsequent storage in a silo;
d) Pressing: the composite previously obtained is submitted to a shaping process by means of pressing in a mould.
e) Firing: once the desired geometry has been obtained using the mould, the piece is submitted to a process of firing at high temperatures with the aim of furnishing it the mechanical properties desired.

The use of traditional porcelain stoneware panels for surfacing in the field of heating as an element to which heating elements or devices are attached is known. The applicant of this patent application, taking advantage of benefits inherent in porcelain stoneware, has started to use it as an accumulator and radiator in heating systems, generating various utility models and national and international patents, such as Spanish patent ES 2 265 783 "Gres porcelánico con cobertura de metal sintético" (porcelain stoneware with synthetic metal covering), Spanish Utility Model ES 1 042 460 "Radiador eléctrico perfeccionado" (Improved electrical radiator), Spanish patent ES 2 265 784 "Disposición para el calefactado de placas en gres porcelánico para su actuación como acumulador y radiante para calefacción" (arrangement for the heating of porcelaneous stoneware panels for use as an accumulator and a radiant element for heating) and international patent PCT/ES2006/00464 of the same title.

However, the application of traditional porcelain stoneware for surfacing in heating systems entails a series of limitations. These limitations are:
1. Thermal accumulation: Porcelain stoneware manufactured in standard dimensions (plane ceramic for surfacing) only allows an accumulation on average of approximately 45 mins and this cannot be increased using this material alone;
2. Mechanisation: As a consequence of the distribution of material produced by traditional systems of moulding, it is impossible to mechanically work it, because being already of high hardness, machining operations (perforations, slots, etc.) generate micro-fractures that in heating applications (continuous expansions and contractions due to thermal effects), make the material weak and break it;
3. Natural convection: Through the manufacturing processes of porcelain stoneware, planar configurations are obtained. Application to heating systems with heat sources, such as hot water circulating through copper tubes or similar, does not permit the generation of natural convection chimneys, reducing thermal transmission and thereby reducing the thermal performance of the equipment.

In view of the foregoing, there is a need to provide a thermal accumulation-transmission panel and a method of obtaining it that solves all of the drawbacks mentioned; in particular, to improve the thermal accumulation performance, furnish better mechanical properties and enable an increase in natural convection with respect to traditional panels of porcelain stoneware.

### SUMMARY OF THE INVENTION

Surprisingly the inventors have found that changing the starting materials and the manufacturing process of traditional porcelain stoneware panels, it is possible to confer on these panels a three-dimensional disposition that is especially advantageous for its application in heating. The improved porcelain stoneware panels thus obtained, or the panels of the invention, show excellent thermal properties as a result of a combination of chemical composition and novel geometry. In particular, the porcelain stoneware panels of the invention improve thermal accumulation performance, exhibit better mechanical properties and increase natural convection with respect to traditional porcelain stoneware panels.

The invention is directed to a thermal accumulation-transmission panel that comprises porcelain stoneware, characterised in that the chemical composition of the porcelain stoneware comprises between 80.0% and 90.0% SiO₂, and between 5.0% and 15.0% Al₂O₃, and in that the geometry of the panel presents parallelepiped projections on one of its faces and has a thickness of at least 12mm.

According to a specific embodiment, the panel of the invention comprises between 82.0% and 86.0% SiO₂, preferably 84.6%. According to another specific embodiment, the panel of the invention comprises between 8.0% and 10.0% Al₂O₃, preferably 9%.

The presence of parallelepiped projections on the part adjacent to the heat source facilitates, as will be seen later, thermal transmission by convection and radiation, as well as thermal accumulation.

Likewise, the thickness enables the panel to conserve its mechanical properties and enhances the thermal accumulation capacity with respect to traditional porcelain stoneware panels, which are narrower. According to a preferred embodiment, the thickness of the porcelain stoneware panel of the invention is between 12mm and 16mm, preferably 14mm.

In another preferred embodiment, the porcelain stoneware panel of the invention presents on the face adjacent to the heat source blind peripheral slots, obtained during the process of moulding, for housing attachment systems of the panel to various heat sources.

### BRIEF DESCRIPTION OF THE FIGURES

In order to complement the description which follows below and with the aim of helping towards a better understanding of the characteristics of the invention, in accordance with a preferred example of a practical embodiment thereof, a set of drawings is included as an integral part of this description wherein, in an illustrative and non-limitative manner, the following are represented:
- Figure 1: shows a graph representing a firing cycle of normal porcelain stoneware used for surfacing (discontinuous line), comparing it with a firing cycle according to the process of this invention (continuous line) for obtaining an improved porcelain stoneware for use in heating systems.
- Figures 2a and 2b: show respectively the energy-dispersive X-ray analysis on porcelain stoneware for normal surfacing use and on improved porcelain stoneware for use in heating systems, which is the object of this invention.

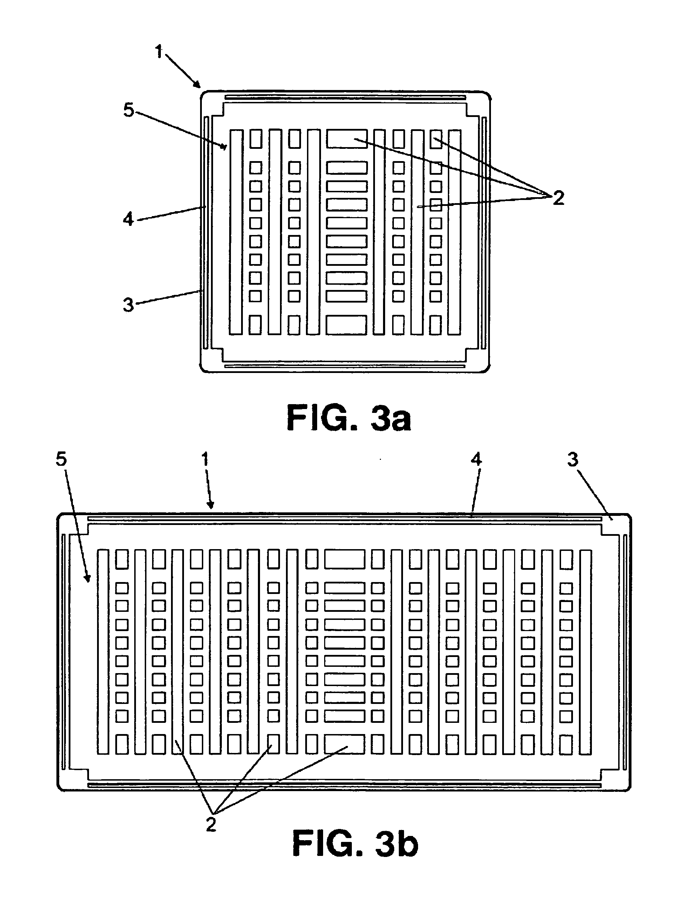

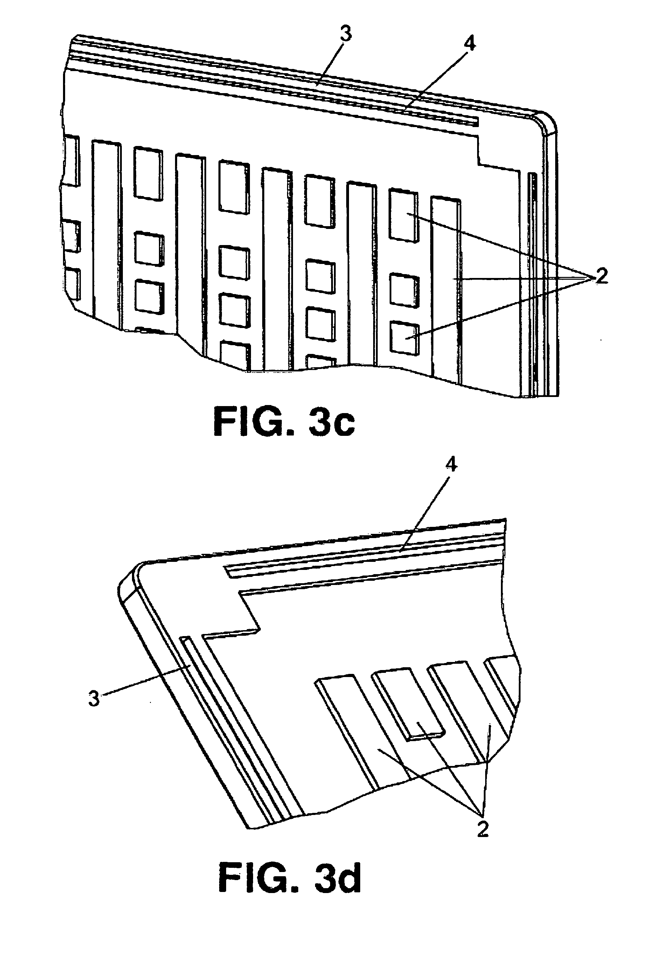

- Figure 3: shows a preferred embodiment of an accumulation panel of improved porcelain stoneware according to the invention.
- Figure 4: shows a graph of the comparative thermal inertia between normal porcelain stoneware used for surfacing (discontinuous line) and improved porcelain stoneware for heating (continuous line).

### DETAILED DESCRIPTION OF THE INVENTION

The chemical composition of the improved porcelain stoneware panel (1) comprises a higher silica content and a lower alumina content compared with the composition of a traditional porcelain stoneware panel. Specifically, the composition of the porcelain stoneware of the invention comprises:
- between 80.0% and 90.0% SiO₂; and
- between 5.0% and 15.0% Al₂O₃.

The silica and alumina contents expressed in this invention are those obtained after an analysis by calcination at 900°C.

For the purposes of this invention, silica is understood in its commonly accepted meaning, i.e. SiO₂ in its various polymorphic forms. Also, for the purposes of this invention, alumina is understood in its commonly accepted meaning, i.e., Al₂O₃ in its various polymorphic forms.

According to a specific embodiment, the silica content is between 82.0% and 86.0% and preferably 84.6%. According to another specific embodiment, the alumina content is between 8.0% and 10.0% and preferably 9.0 %.

With the aim of enhancing thermal accumulation, the panel (1) of the invention has a thickness of at least 12mm, preferably between 12mm and 16mm and still more preferably of 14mm. Traditional panels of porcelain stoneware present a lower thickness, usually between 9mm and 11mm, due to the difficulty of maintaining the mechanical properties of the material at higher thicknesses. However, due to the manufacturing process, the panel (1) of the invention can have higher thicknesses than panels of traditional stoneware, with its mechanical properties being unchanged.

Additionally, during the manufacturing processes it is possible to confer on the porcelain stoneware panel (1) of the invention an original configuration in the form of parallelepiped projections (2) on at least one of its faces (5). Preferably, one face (5) furnished with said series of parallelepiped projections (2) is the face (5) that will be placed adjacent to a heat source, thereby substantially improving the processes of thermal transmission and accumulation. The parallelepiped projections (2) of the panel of the invention are distributed in a central area on this face (5) in order to encourage convection.

These projections (2) enable the creation of natural convection chimneys that on the one hand improve the thermal transmission by natural convection and, on the other hand, encourage heat transmission from the face adjacent to the heat source to the distal face. As an additional effect, the projections (2) increase the surface area of the panel (1) and therefore improve thermal accumulation and radiation.

In the context of this specification, a panel adjacent to a heat source can relate to a relationship of closeness if the heat source is not appropriate for contact with the panel, for example in the case of a resistance of fins, or of contact, if it is for example a resistance by cables or a water recirculation system.

In a preferred embodiment, the panel (1) additionally presents a peripheral ridge (3) of higher thickness on the face furnished with parallelepiped projections. Consequently, when the panel (1) is placed adjacent to a heat source, said ridge (3) encourages the creation of hot air pockets, laterally closes the equipment to encourage the chimney effect, diverts the convection of hot air from the upper part of the panel, so reducing excessive heating of the part of the equipment most likely to be touched by a user and brings higher resistance to an anchoring element, as will be seen below.

In the previous embodiment of the panel (1) of the invention, equipped with a peripheral ridge (3), the central zone whereon the parallelepiped projections are distributed occupies approximately the entire face (5), except for the peripheral zone occupied by the ridge (3).

In another preferred embodiment, the improved porcelain stoneware panel (1) presents on the face (5), adjacent to the heat source, peripheral blind slots (4), which can be created during the moulding process and which make possible the insertion of fastening elements of the panel to systems which will be placed thereagainst and over which the heat source will be incorporated. In a still more preferred embodiment, the peripheral blind slots (4) are arranged on the peripheral ridge (3) of a panel (1) equipped with a peripheral ridge (3). Consequently, greater resistance is provided to the anchoring element as the slots (4) are made in an area of the panel (1) of higher thickness.

The geometry of the shape of the over-thick panel, together with the possibility of using the peripheral blind slots (4) as supporting and fastening elements, make the porcelain stoneware panel (1) of the invention optimal for use in any heating system, irrespective of the heat source used. Therefore, this heat source can be of any type, such as, for example, electricity or water.

The manufacturing process for the improved porcelain stoneware panel is based on a modification of the manufacturing process of traditional porcelain stoneware for surfacing. This process enables the manufacture of porcelain stoneware panels that exhibit a substantial improvement in thermal accumulation and transmission capacity with respect to traditional porcelain stoneware, retaining their mechanical properties.

The manufacturing process starts with a careful selection and combination of natural raw materials. The base material for the process of the invention comprises a lower content of clays with respect to the base material for traditional stoneware for surfacing, and in contrast also includes whitening additives. The following table shows a comparison between the composition of the base material for traditional porcelain stoneware for surfacing and of improved porcelain stoneware according to a specific embodiment of the invention.

| | Traditional porcelain stoneware in surfacing | Improved porcelain stoneware for heating applications |
|---|---|---|
| Clays | 50% - 60% | 30% - 40% |
| Fluxes | 40% - 50% | 45% - 55% |
| Whitening additives | 0% | 10% - 20% |

Feldspars act as fluxes and among the whitening additives are, for example, zirconium oxide.

Once the base material has been selected, it is homogenised, micronized and atomised in the same way as in the manufacturing process for traditional porcelain stoneware for surfacing. However, the pressing and firing stages differ compared with respect to said process.

While the pressing force used in industrial processes for obtaining porcelain stoneware for surfacing varies between 2500 tonnes and 2800 tonnes, in the case of this invention it is necessary to use a force of at least 3000 tonnes, preferably between 3500 and 4000 tonnes, and still more preferably 3800 tonnes.

Also, the process of the invention increases the total firing time, i.e., the combination of heating, firing and cooling, with respect to the manufacturing process of traditional porcelain stoneware for surfacing, which is around 54 minutes. The total firing time according to the process of the invention is at least 60 minutes, preferably between 60 and 80 minutes and still more preferably 70 minutes.

A heating device can comprise the porcelain stoneware panel (1) of the invention and a heat source. As previously described, the heat source can be of any type, such as, for example, an electrical heat source or the recirculation of a fluid with thermal accumulation capacity (water, oil, etc.). Preferably, the porcelain stoneware panel (1) and the heat source are bound by means of the insertion of fixing elements into the peripheral blind slots (4) of the panel itself.

### EXAMPLES

Example 1 - Chemical analysis by calcination at 900°C The following table shows, for comparative purposes, the chemical composition of a sample of normal porcelain stoneware for surfacing.

| | |
|---|---|
| SiO₂ | 68.6 % |
| Al₂O₃ | 18.1 % |
| B₂O₃ | < 0.15 % |
| Fe₂O₃ | 2.13 % |
| CaO | 0.37 % |
| MgO | 0.23 % |
| Na₂O | 4.49 % |
| K₂O | 1.31 % |
| TiO₂ | 0.69 % |
| ZrO₂ | 0.08 % |
| BaO | 0.12 % |
| Li₂O | < 0.01 % |
| PbO | < 0.01 % |
| ZnO | < 0.01 % |
| HfO₂ | < 0.01 % |
| P₂O₅ | 0.20 % |
| SrO | 0.03 % |
| Cr₂O₃ | 0.73 % |
| Loss due to calcination at 900°C | 2.66 % |

The following table shows the chemical composition of a sample of improved porcelain stoneware for heating applications. This chemical composition differs from that of normal porcelain stoneware for surfacing by approximately 7% in the silicon and aluminium oxide content:

| | |
|---|---|
| SiO₂ | 84.6 % |
| Al₂O₃ | 9.0 % |
| B₂O₃ | < 0.15 % |
| Fe₂O₃ | 0.41 % |
| CaO | 0.23 % |
| MgO | 0.33 % |
| Na₂O | 2.40 % |
| K₂O | 0.97 % |
| TiO₂ | 0.34 % |
| ZrO₂ | 0.04 % |
| BaO | 0.03 % |
| PbO | < 0.01 % |
| ZnO | 0.01 % |
| HfO₂ | < 0.01 % |
| P₂O₅ | 0.04 % |
| SrO | 0.01 % |
| Loss due to calcination at 900°C | 1.63 % |

### Example 2 - Firing cycles

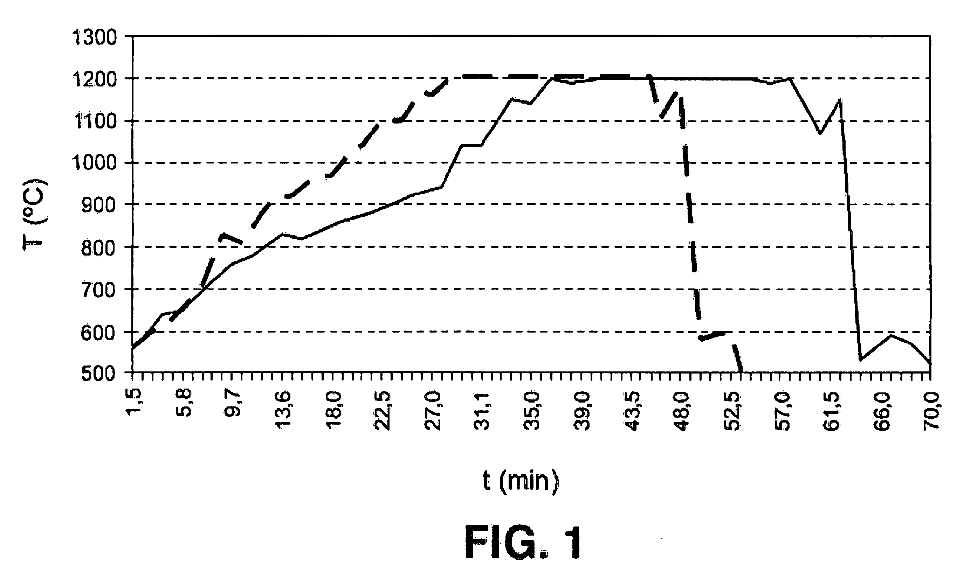

As can be seen in Figure 1, the total firing time, i.e. the combination of heating, firing and cooling of a cycle according to the process (continuous line) is longer than that corresponding to a manufacturing process for traditional porcelain stoneware (discontinuous line), reaching improved stoneware - 70 minutes.

### Example 3 - Energy-dispersive X-ray analysis

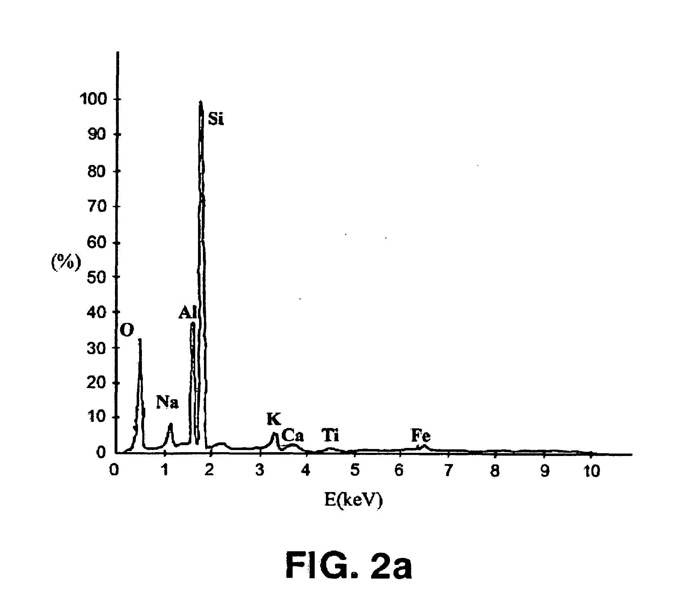

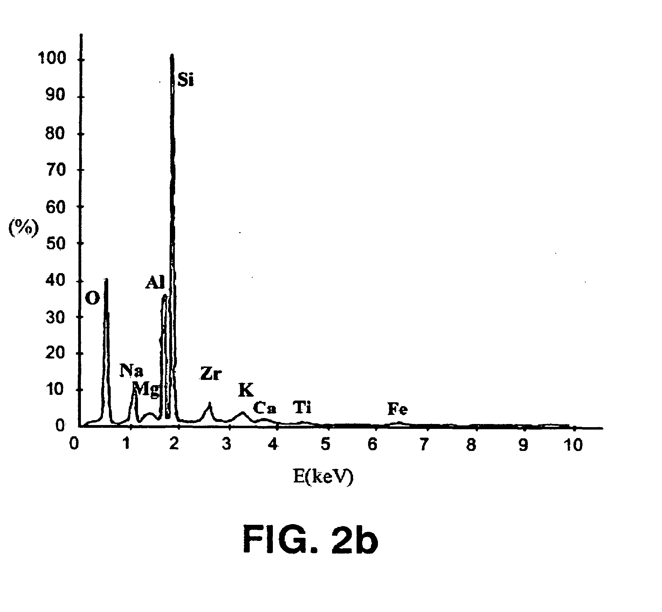

Figure 2b (improved porcelain stoneware) shows the content of Si, Al and the presence of Zr in comparison with traditional porcelain stoneware of Figure 2a.

### Example 4 - Graph of thermal inertia

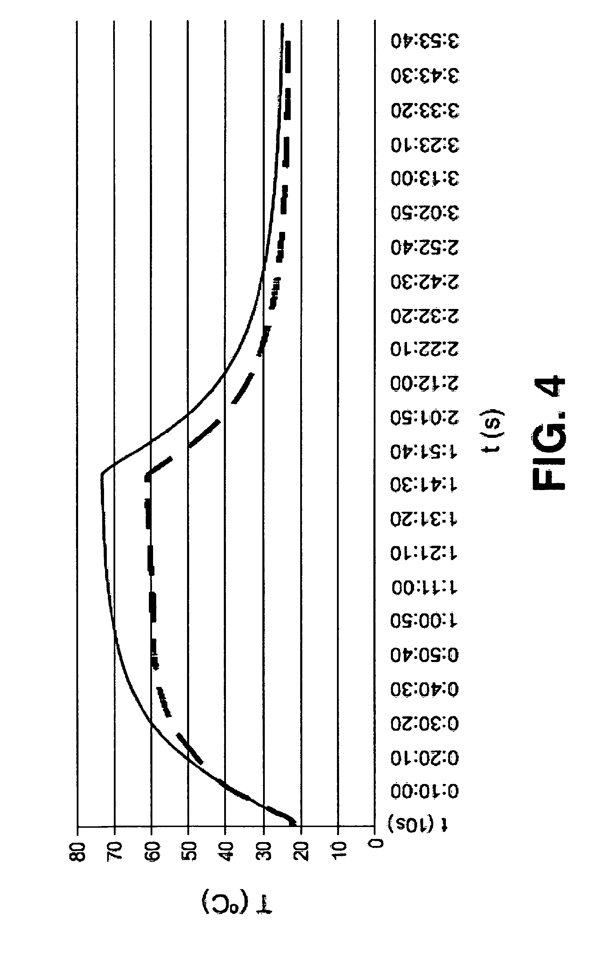

In the test shown in Figure 4, the thermal inertia of a 1000W electrical device equipped with a normal porcelain stoneware panel for surfacing and the same device equipped with an improved porcelain stoneware panel according to the invention are compared. It can be seen that the normal equipment reaches a maximum temperature (at the point of the study) of 61°C while the equipment with the improved porcelain stoneware reaches 74°C in the same time period. On the other hand, during the cooling process, while the normal equipment takes approximately 40 minutes to cool to 30°C, the equipment with the improved porcelain stoneware takes another 21 minutes more to reach the same temperature, i.e., it is releasing heat for 53% more time.

## Claims

1. Thermal accumulation-transmission panel (1) which comprises porcelain stoneware **characterised in that**:
the chemical composition of the porcelain stoneware comprises:
- between 80.0% and 90.0 % SiO₂; and
- between 5.0% and 15.0 % Al₂O₃;
**in that** its geometry presents parallelepiped projections (2) on one of the faces (5) and
**in that** its thickness is at least 12mm.

2. Thermal accumulation-transmission panel (1) according to claim 1, **characterised in that** it comprises between 82.0% and 86.0% SiO₂, preferably 84.6% SiO₂.

3. Thermal accumulation-transmission panel (1) according to any of claims 1 or 2, **characterised in that** it comprises between 8.0% and 10.0% Al₂O₃, preferably 9.0% Al₂O₃.

4. Thermal accumulation-transmission panel (1) according to any of the previous claims **characterised in that** it has a thickness of between 12mm and 16mm, preferably 14mm.

5. Thermal accumulation-transmission panel (1) according to any of the previous claims **characterised in that** it has peripheral blind slots (4) on the face (5) that has parallelepiped projections (2).

6. Thermal accumulation-transmission panel (1) according to any of the previous claims **characterised in that** it has a peripheral ridge (3).

## Patentansprüche

1. Thermisches Speicher-Übertragungsspanel (1), welches Feinsteinzeug umfasst, **dadurch gekennzeichnet, dass**:
die chemische Zusammensetzung des Feinsteinzeugs umfasst:
- zwischen 80,0% und 90,0 % SiO₂; und
- zwischen 5,0% und 15,0 % Al₂O₃;
dass seine Geometrie parallelflache Projektionen (2) auf einer der Flächen (5) aufweist und
dass seine Dicke zumindest 12mm beträgt.

2. Thermisches Speicher-Übertragungspanel panel (1) nach Anspruch 1, **dadurch gekennzeichnet, dass** es zwischen 82,0% und 86,0% SiO₂, bevorzugt 84,6% SiO₂, umfasst.

3. Thermisches Speicher-Übertragungspanel (1) nach einem der Ansprüche 1 oder 2, **dadurch gekennzeichnet, dass** zwischen 8,0% und 10, 0% Al₂O₃, bevorzugt 9, 0% Al₂O₃, umfasst.

4. Thermisches Speicher-Übertragungspanel (1) nach einem der vorhergehenden Ansprüche, **dadurch gekennzeichnet, dass** es eine Dicke zwischen 12mm und 16mm, bevorzugt 14mm, aufweist.

5. Thermisches Speicher-Übertragungspanel (1) nach einem der vorhergehenden Ansprüche, **dadurch gekennzeichnet, dass** Sacklanglöcher (4) am Umfang der Fläche (5) ausgebildet sind, die parallelflache Projektionen (2) aufweist.

6. Thermisches Speicher-Übertragungspanel (1) nach einem der vorhergehenden Ansprüche, **dadurch gekennzeichnet, dass** es eine Randleiste (3) aufweist.

## Revendications

1. Panneau à accumulation-transmission thermique (1) qui comprend du grès porcelainé, **caractérisé en ce que** :
la composition chimique du grès porcelainé comprend :
- entre 80,0 % et 90,0 % de SiO₂; et
- entre 5,0 % et 15,0 % de Al₂O₃;
**en ce que** sa géométrie représente des saillies parallélépipèdes (2) sur l'une des faces (5), et
**en ce que** son épaisseur est d'au moins 12 mm.

2. Panneau à accumulation-transmission thermique (1) selon la revendication 1, **caractérisé en ce qu'**il comprend entre 82,0 % et 86,0 % de SiO₂, de préférence 84,6 % de SiO₂.

3. Panneau à accumulation-transmission thermique (1) selon l'une quelconque des revendications 1 ou 2, **caractérisé en ce qu'**il comprend entre 8,0 % et 10,0 % de Al₂O₃, de préférence 9,0 % de Al₂O₃.

4. Panneau à accumulation-transmission thermique (1) selon l'une quelconque des revendications précédentes, **caractérisé en ce qu'**il a une épaisseur comprise entre 12 mm et 16 mm, de préférence de 14 mm.

5. Panneau à accumulation-transmission thermique (1) selon l'une quelconque des revendications précédentes, **caractérisé en ce qu'**il a des fentes périphériques borgnes (4) sur la face (5) qui a des saillies parallélépipèdes (2).

6. Panneau à accumulation-transmission thermique (1) selon l'une quelconque des revendications précédentes, **caractérisé en ce qu'**il a une crête périphérique (3).
